# FASCICULE DE BREVET EUROPEEN

(11) **EP 2 850 297 B1**
(45) Date de publication et mention de la délivrance du brevet: **25.04.2018**
(21) Numéro de dépôt: 13727257.1
(22) Date de dépôt: 03.05.2013
(51) Int. Cl.: F02M 26/07

(54) **VANNE DE CIRCULATION DE FLUIDE, NOTAMMENT POUR VÉHICULE AUTOMOBILE, ET DISPOSITIF DE CONDITIONNEMENT THERMIQUE COMPRENANT UNE TELLE VANNE**
FLÜSSIGKEITSUMLAUFVENTIL, INSBESONDERE FÜR EIN KRAFTFAHRZEUG, UND THERMISCHE AUFBEREITUNGSVORRICHTUNG MIT SOLCH EINEM VENTIL
FLUID CIRCULATION VALVE, NOTABLY FOR A MOTOR VEHICLE, AND THERMAL CONDITIONING DEVICE COMPRISING SUCH A VALVE

(30) Priorité: 15.05.2012 FR 1254434
(43) Date de publication de la demande: 25.03.2015
(73) Titulaire: Valeo Systèmes de Contrôle Moteur, 95800 Cergy (FR)
(72) Inventeur: LALLEMANT, Mathieu, F-78600 Maisons-laffitte (FR); GIRARDON, Franck, F-78700 Conflans Sainte Honorine (FR); LEBRASSEUR, Patrick, F-60240 Montagny En Vexin (FR)
(74) Mandataire: Garcia, Christine
(86) Numéro de dépôt international: PCT/FR2013/050998
(87) Numéro de publication internationale: WO 2013/171404

(56) Documents cités:
- EP-A2- 1 138 888
- DE-A1- 19 860 637
- FR-A1- 2 891 590
- JP-A- 2001 227 659
- US-A- 4 286 625

## Description

La présente invention concerne une vanne de circulation de fluide destinée plus particulièrement quoique non exclusivement à équiper les systèmes de circulation de fluide associés aux moteurs à combustion interne, qu'ils soient à essence ou Diesel, de véhicules, notamment de véhicules automobiles.

De telles vannes peuvent avoir des fonctionnalités diverses et, par exemple, quand elles sont prévues sur les moteurs Diesel à turbocompresseur, elles peuvent être utilisées pour doser la quantité d'air amenée dans la ligne d'admission du moteur, ou pour dériver une partie des gaz d'échappement circulant dans la ligne d'échappement et l'envoyer en direction de la ligne d'admission, notamment à des fins de traitement des oxydes d'azote. On parle alors de gaz d'échappement recirculés. Les vannes selon l'invention concernent ainsi, en particulier, les vannes permettant la circulation de gaz.

Dans les circuits de gaz d'échappement recirculés, il est connu d'utiliser des échangeurs de chaleur, dit refroidisseur de gaz d'échappement recirculés, permettant d'abaisser la température desdits gaz. Cependant, dans certains cas de fonctionnement, il n'est pas nécessaire de refroidir les gaz d'échappement. Il est alors intéressant de pouvoir les faire circuler vers la ligne d'admission du moteur sans passer par l'échangeur de chaleur. Les circuits de gaz d'échappement recirculés comprennent pour cela une voie refroidie munie de l'échangeur de chaleur et une voie non-refroidie, contournant la voie refroidie.

Il est ainsi connu des circuits de gaz d'échappement recirculés comprenant une première vanne permettant de doser la quantité de gaz d'échappement recirculés et une seconde vanne permettant d'orienter les gaz vers la voie refroidie ou vers la voie non-refroidie. On comprend que de tels circuits présentent des inconvénients en ce qu'ils nécessitent deux vannes distinctes.

Par ailleurs, les refroidisseurs de gaz d'échappement sont sujets à un encrassement et il est intéressant de pouvoir modifier le sens de circulation des gaz d'échappement à l'intérieur des échangeurs de chaleur pour limiter ce phénomène. Un tel fonctionnement nécessite cependant des actionneurs supplémentaires.

On rencontre une situation comparable dans les lignes d'admission du moteur. En effet, dans celles-ci, il est connu d'utiliser des refroidisseurs d'air de suralimentation. Cependant, dans certains cas de fonctionnement, il n'est pas nécessaire de refroidir les gaz d'admission. Il est alors intéressant de pouvoir les faire circuler vers le moteur sans passer par le refroidisseur. Les circuits de gaz d'admission comprennent pour cela une voie refroidie munie du refroidisseur d'air de suralimentation et une voie non-refroidie, contournant la voie refroidie.

Il est ainsi connu des circuits d'alimentation en air du moteur comprenant une première vanne permettant de doser la quantité de gaz d'admission et une seconde vanne permettant d'orienter les gaz vers la voie refroidie ou vers la voie non-refroidie. On comprend que de tels circuits présentent eux-aussi des inconvénients en ce qu'ils nécessitent deux vannes distinctes.

Par ailleurs, dans certaines architectures de moteur, les gaz d'admission comportent, outre l'air d'admission, des gaz d'échappement recirculés. Dans le cas où ceux-ci sont injectés dans le circuit en amont du refroidisseur d'air de suralimentation, ce dernier risque d'être sujet à un encrassement et il est intéressant de pouvoir modifier le sens de circulation des gaz d'admission à l'intérieur des refroidisseurs d'air de suralimentation pour limiter ce phénomène. Là encore, un tel fonctionnement nécessite cependant des actionneurs supplémentaires.

Le document FR 2 891 590 divulgue un dispositif de conditionnement thermique de fluide comprenant les caractéristiques du préambule de la revendication 1. La présente invention a pour but de remédier à ces inconvénients et concerne une vanne de circulation de fluide, notamment pour véhicule automobile, comprenant un corps et un élément obturateur pouvant occuper, par rotation dudit élément par rapport audit corps, différentes positions angulaires, ledit corps présentant une première, une seconde, une troisième et une quatrième entrées/sorties, ladite vanne étant configurée pour autoriser :
- dans l'une première desdites positions angulaires, la circulation du fluide de la première à la seconde entrée/sortie,
- dans l'une seconde desdites positions angulaires, la circulation du fluide de la première à la troisième entrée/sortie, et de la quatrième à la seconde entrée/sortie,
- dans l'une troisième desdites positions angulaire, la circulation du fluide de la première à la quatrième entrée/sortie, et de la troisième à la seconde entrée/sortie.

Dans la première desdites positions angulaires, la vanne peut être configurée pour autoriser la circulation du fluide entre les première, seconde, troisième et quatrième entrées/sorties. Autrement dit le fluide peut librement circuler de n'importe quelle entrée vers n'importe quelle sortie.

La première desdites positions angulaires peut être une position angulaire appartenant à un secteur angulaire excluant au moins la seconde et la troisième position angulaire.

On dispose de la sorte, selon l'invention, d'une vanne offrant de nombreuses options de circulation du fluide par la seule rotation de son élément obturateur.

Selon différents modes de réalisation de la vanne conforme à l'invention, qui pourront être pris ensemble ou séparément :
- ledit élément obturateur présente une course angulaire supérieure à 360°,
- lesdites première et seconde entrées/sorties sont radiales,
- ladite troisième entrée/sortie est radiale et axialement décalée par rapport à ladite première entrée/sortie vers une extrémité axiale dudit corps,
- ladite quatrième entrée/sortie est radiale et axialement décalée par rapport à ladite seconde entrée/sortie vers une extrémité axiale dudit corps,
- lesdites troisième et quatrième entrées/sorties sont décalées axialement vers des extrémités axiales opposées dudit corps,
- lesdites troisième et/ou quatrième entrées/sorties sont axiales,
- lesdites première et seconde entrées/sorties sont dans le prolongement l'une de l'autre,
- lesdites première et seconde entrées/sorties sont de même section,
- lesdites première et seconde entrées/sorties sont de section plus importantes que lesdites troisième et quatrième entrées/sorties. Ainsi, dans la première desdites positions angulaires, la vanne peut être configurée pour autoriser la circulation du fluide principalement de la première à la seconde entrée/sortie. Le fluide circule principalement de la première à la seconde entrée/sortie lorsque le débit du fluide circulant de la première entrée vers la deuxième sortie est supérieur au débit des autres circulations.

Selon un aspect de l'invention, ledit corps comprend un logement interne cylindrique à section transversale circulaire, et ledit élément obturateur comporte au moins une partie d'obturation, notamment elliptique, agencée dans un plan incliné par rapport audit logement cylindrique et coopérant avec la paroi latérale dudit logement par une génératrice périphérique, de manière à assurer un contact étanche entre l'élément obturateur et le corps en au moins une position angulaire.

Ainsi, selon cet aspect de l'invention, on obtient une étanchéité sur l'intégralité de la périphérie du volet dans les positions angulaires isolant la première entrée/sortie de la seconde entrée/sortie, en particulier dans la deuxième et la troisième position angulaire. La partie d'obturation tourne sur 360° et, dans les positions angulaires isolant la première entrée/sortie de la seconde entrée/sortie, assure l'étanchéité avec la paroi latérale du logement grâce au contact continu entre eux, donné par l'inclinaison de la partie d'obturation avec la paroi du logement, ceci que ladite partie d'obturation ait tourné dans un sens ou dans l'autre.

De préférence, ladite partie inclinée de l'élément obturateur est conformée en un disque rotatif dont le bord périphérique constitue la génératrice de contact avec la paroi latérale du logement cylindrique, notamment de manière à assurer un contact cylindre sur cylindre. Ainsi, la projection du disque rotatif incliné, le long de l'axe rotation, dans le logement cylindrique est circulaire et le disque coopère parfaitement avec la paroi latérale de celui-ci de section correspondante. On remarque la simplicité de réalisation de la partie inclinée d'obturation qui permet en outre, comme dit précédemment, d'éviter les fuites dans les positions du disque isolant la première entrée/sortie de la seconde entrée/sortie.

La partie inclinée d'obturation forme, par exemple, un angle de sensiblement 45° avec l'axe du logement cylindrique du corps.

Avantageusement, ledit élément obturateur comporte une tige de commande qui est reliée à la partie inclinée pour l'entraîner en rotation et qui est disposée dans l'axe dudit logement cylindrique passant par le centre de ladite partie inclinée. Cette tige porte ainsi simplement en bout le disque, de sorte que cette réalisation de l'élément obturateur s'affranchit de l'axe s'étendant usuellement le long du volet et entraînant les difficultés d'assemblage et les risques de fuite et d'interférence liés au désaxage.

En effet, le volet n'est pas dans le plan de son arbre de rotation, ce qui réduit les interférences entre ces deux pièces. De plus, le volet, par sa symétrie, peut se monter indifféremment dans les deux sens sans avoir recours à un détrompage.

En particulier, ladite tige et ladite partie inclinée de l'élément obturateur peuvent être réalisées en une seule pièce, ou assemblées fixement l'une à l'autre par surmoulage, soudage, collage, élément de fixation, etc...

De préférence, du côté opposé à la partie inclinée d'obturation, la tige est montée dans un palier de guidage solidaire du corps et/ou est reliée, en sortie de celui-ci, à un dispositif d'entraînement en rotation.

L'invention concerne aussi un dispositif de conditionnement thermique de fluide comprenant une telle vanne.

Selon différents modes de réalisation dudit dispositif qui pourront être pris ensemble ou séparément :
- ledit dispositif comprend en outre un échangeur de chaleur relié entre ladite troisième et ladite quatrième entrées/sorties, au niveau d'une voie, dite refroidie,
- ledit dispositif comprend une voie, dite non-refroidie, reliée à ladite deuxième entrée/sortie,
- ledit échangeur est configuré pour être un échangeur de gaz d'échappement recirculé et ladite vanne est configurée pour être une vanne de gaz d'échappement recirculé,
- ledit échangeur est configuré pour être un refroidisseur d'air de suralimentation et ladite vanne est configurée pour être une vanne doseuse d'air.

Différents modes de réalisation de l'invention seront décrits ci-après en regard des figures annexées qui feront bien comprendre comment l'invention peut être réalisée. Sur ces figures, des références identiques désignent des éléments semblables.
Les figures 1, 2 et 3 sont des vues schématiques d'un dispositif de conditionnement de fluide comprenant une vanne, ledit dispositif et ladite vanne étant conformes à l'invention, ladite vanne étant illustrée selon trois positions de fonctionnement respectives.
La figure 4 est une vue extérieure en plan d'un mode de réalisation d'une vanne conforme à l'invention.
La figure 5 montre, en perspective, le corps de la vanne de la figure 4.
La figure 6 montre en perspective l'élément obturateur de la vanne de la figure 4.
Les figures 7 à 10 représentent respectivement, en coupe transversale, les positions de l'élément obturateur dans des positions, mettant en communication la première et la seconde entrées/sorties, de 90°, 45°, 5° et, isolant la première et la seconde entrées/sorties, de 0° ou 180°, dans la vanne de la figure 4.
Les figures 11 et 12 montrent des graphiques représentant respectivement la zone de contact du disque de l'élément obturateur de la vanne de la figure 4, dans la première position angulaire et dans la seconde ou troisième position angulaire, sur le logement du corps de ladite vanne ci-dessus, illustré à plat.

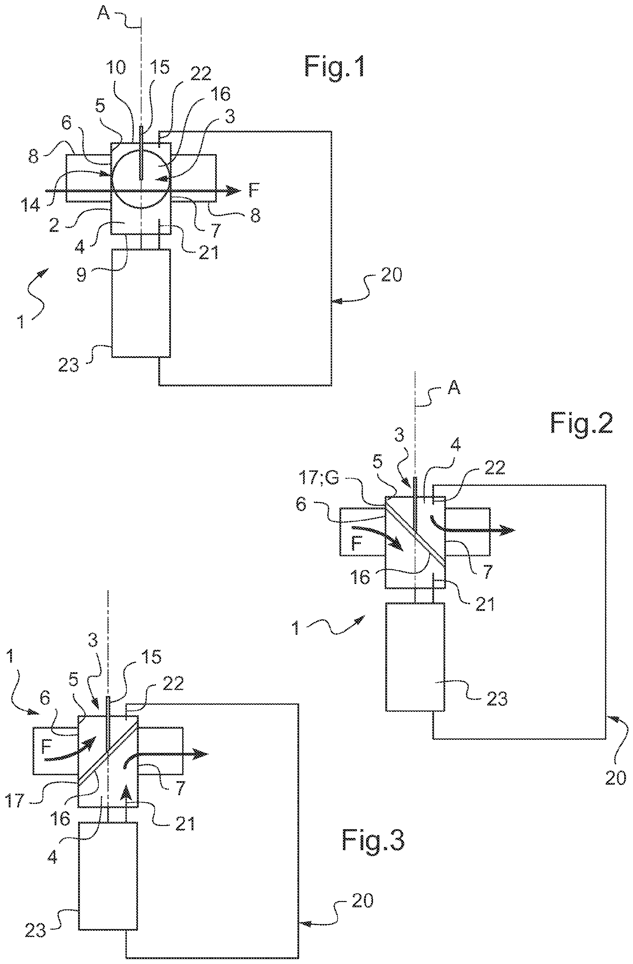

Comme illustré aux figures 1 à 3, la vanne 1 de circulation de fluide conforme à l'invention comprend un corps 2 et un élément obturateur 3 pouvant occuper, par rotation dudit élément obturateur 3 par rapport audit corps 2, différentes positions angulaires.

Le corps 2 présente ici un logement interne 4, apte à être traversé par ledit fluide. L'élément obturateur 3 est disposé dans ledit logement interne 4.

Ledit corps 2 présente une première 6, une seconde 7, une troisième 21 et une quatrième 22 entrées/sorties. Lesdites première, seconde, troisième et quatrième entrées/sorties sont définies, par exemple, par des orifices ménagés dans ledit corps 2 et débouchant dans logement interne 4.

Selon, l'invention, ladite vanne est configurée pour autoriser :
- dans l'une première desdites positions angulaires, illustrée à la figure 1, la circulation du fluide de la première 6 à la seconde 7 entrée/sortie,
- dans l'une seconde desdites positions angulaires, illustrée à la figure 2, la circulation du fluide de la première 6 à la troisième 21 entrée/sortie, et de la quatrième 22 à la seconde 7 entrée/sortie, selon la flèche repérée F,
- dans l'une troisième desdites positions angulaire, illustrée à la figure 3, la circulation du fluide de la première 6 à la quatrième 22 entrée/sortie, et de la troisième 21 à la seconde 7 entrée/sortie.

En l'occurrence, on constate que la première 6 et la seconde 7 entrées/sorties définissent, respectivement, une entrée et une sortie, dans chacune des première, seconde et troisième positions angulaires de la vanne, tandis que la troisième 21 et la quatrième 22 entrées/sorties définissent alternativement une entrée et une sortie pour le fluide traversant la vanne 1, dans la seconde et la troisième position angulaire de la vanne.

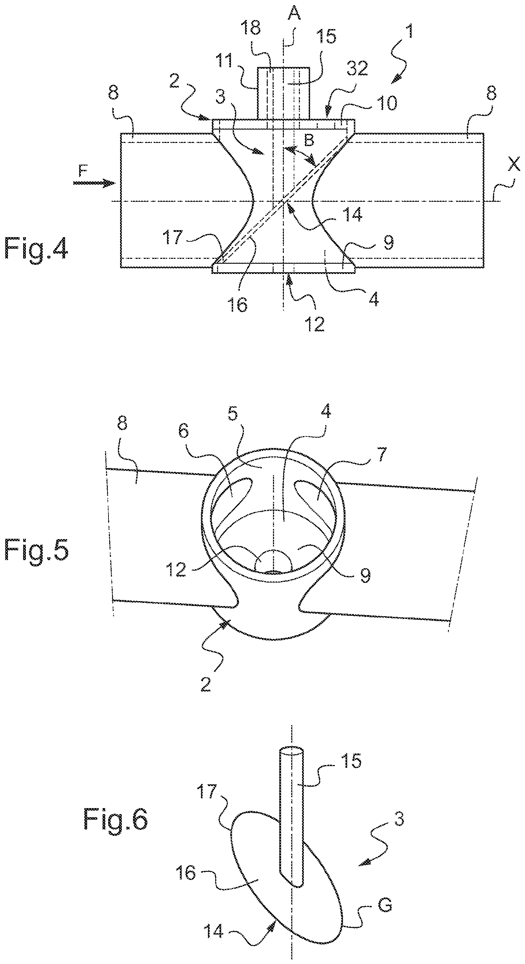

Le logement interne 4 est cylindrique d'axe A et de section circulaire. Il est délimité par une paroi latérale 5 du corps 2. Ce logement interne peut être assimilé à un alésage. Dans la paroi de celui-ci débouchent ici radialement à l'axe A, l'entrée 6 et la sortie 7 formant un passage pour le fluide destiné à circuler à travers le logement 4 de la vanne. Ces entrée 6 et sortie 7 sont, par exemple, radiales et alignées l'une par rapport à l'autre. Elles présentent ici un axe longitudinal X (figure 4) coupant perpendiculairement l'axe A du logement 4, et ont des diamètres identiques. Elles pourront se prolonger au-delà de la paroi latérale 5 du logement par des conduits 8 intégrés au corps 2 et destinés au raccordement de ladite vanne.

On voit par ailleurs que le logement cylindrique interne 4 comprend un fond transversal 9 à l'une de ses extrémités, tandis qu'à son extrémité opposée, se trouve un couvercle transversal 10. Celui-ci est traversé par l'élément obturateur 3 qui coopère avec un dispositif d'entraînement non représenté, géré par une unité de commande connue en soi pour entraîner en rotation, autour de l'axe A, ledit élément obturateur 3.

Ladite troisième entrée/sortie 21 est axiale et située, par exemple, dans le fond transversale 9, notamment au niveau d'un orifice 12 (figure 4).

Ladite quatrième entrée/sortie 22 est axiale et située, par exemple, dans le couvercle transversal 10, notamment au niveau d'un orifice 32 (figure 4).

En variante, ne faisant pas partie de l'invention, les troisième et/ou quatrième entrées/sorties pourront être radiales et décalées axialement par rapport aux première 6 et seconde 7 entrées/sorties, par exemple, respectivement, vers le fond 9 et vers le couvercle 10.

Lesdites première 6 et seconde 7 entrées/sorties sont, par exemple, de section plus importantes que lesdites troisième et quatrième entrées/sorties.

Par le positionnement relatif desdites première et deuxième entrées/sorties 6, 7 par rapport auxdites troisième et quatrième entrées/sorties 21, 22 et par le choix de leur section respective, on favorise la circulation du fluide de l'entrée 6 à la sortie 7 dans ladite première position angulaire.

De manière avantageuse, ledit élément obturateur est configuré pour présenter une course angulaire supérieure à 360°. Autrement dit, il pourra tourner sur lui-même sans limitation angulaire. Ainsi, il pourra revenir à sa position initiale par un tour complet. Il pourra en outre être configuré pour revenir aussi à sa position initiale par une rotation en sens inverse.

Selon un premier mode de réalisation, non illustré, ledit élément obturateur pourra comprendre un boisseau cylindrique, muni de passages de fluide venant ou non en correspondance des première, seconde, troisième et/ou quatrième entrées/sorties, en fonction de ses différentes positions angulaires.

Selon un autre mode de réalisation, correspondant à celui illustré, ledit élément obturateur 3 comporte au moins une partie d'obturation 14 agencée dans un plan incliné par rapport audit logement cylindrique 4 et coopérant avec la paroi latérale 5 dudit logement par une génératrice périphérique de manière à assurer un contact étanche entre l'élément obturateur 3 et le corps 2 en au moins une position angulaire.

Comme on le voit mieux en regard des figures 3 à 5, la partie inclinée 14 est conformée en un volet elliptique 16 disposé dans un plan incliné par rapport à l'axe A du logement cylindrique circulaire 2 et centré sur ledit axe A, de façon que son bord périphérique 17 soit en contact constant avec la paroi latérale 5 du logement 4 de manière à isoler l'entrée 6 et la sortie 7 dans au moins une position angulaire donnée dudit élément obturateur pour mettre ou non en communication fluidique directe l'entrée 6 et la sortie 7, avec un débit réglable, selon la position angulaire donnée au volet d'obturation. Ce bord périphérique 17 constitue ainsi une génératrice G toujours en contact étanche avec la paroi latérale 5 du logement dans les positions angulaires où l'entrée 6 et la sortie 7 sont isolés l'une de l'autre, en particulier dans les deuxièmes et troisièmes positions angulaires.

Par « incliné », on entend compris strictement entre 0° et 90°. Par « volet », on entend une pièce présentant deux surfaces inclinées par rapport à l'axe A et reliées par le bord périphérique 17. Lesdites surfaces inclinées sont éventuellement parallèles entre elles. La pièce présente une faible épaisseur, à savoir une distance comprise entre lesdites surfaces inclinées très inférieures au diamètre du corps 2, notamment dix fois inférieures. Il s'agit, par exemple, d'un disque.

Des considérations géométriques sont prises pour assurer le bon fonctionnement de la vanne 1. Le volet 16 a une forme elliptique de grand-axe supérieur au diamètre du logement circulaire 4 et de petit-axe sensiblement inférieur au diamètre du logement circulaire 4. Ici, le diamètre du logement circulaire 4 est supérieur aux diamètres identiques des entrée 6 et sortie 7 de fluide.

L'élément obturateur 3 comprend en outre une tige de liaison 15. Ladite tige de liaison 15 est agencée suivant l'axe A du logement, de sorte à être centrée sur le disque inclinée, avec l'angle B entre le plan incliné du disque et l'axe A égal ici à 45°. Pour avoir un contact constant avec la paroi latérale 5 du logement, le grand axe du disque 16 est donc sensiblement égal au diamètre du logement multiplié par √2. Ce contact peut être défini comme étant un contact cylindre/cylindre entre la paroi 5 de section circulaire du logement 4 et la génératrice G correspondant au bord périphérique 17 du disque 16 incliné et qui est circulaire en projection sur un plan perpendiculaire à l'axe de rotation du volet. Le petit-axe du volet 16 pourra être sensiblement supérieur au diamètre des entrée 6 et sortie 7 de fluide.

On constate que le montage dudit élément obturateur 3 dans le logement 4 du corps de la vanne ne nécessite aucune opération de réglage fastidieuse, seule une mise en butée axiale du moyen 3 dans le logement étant exigée pour centrer le disque 16 par rapport aux entrée et sortie de fluide.

La tige 15 est associée, par l'une de ses extrémités, au disque 16, par assemblage ou surmoulage, ou elle est formée avec le disque, de sorte à avoir un élément obturateur monobloc 3. A titre d'exemple, le disque 16 peut être en plastique et la tige 15 en métal ou inversement, ou les deux peuvent être en matière plastique ou en métal selon la réalisation monobloc ou composite choisie. L'autre extrémité de la tige traverse un trou axial d'un embout 11 du couvercle 10, par l'intermédiaire d'un palier de guidage 18. Elle est reliée au dispositif d'entraînement en rotation, non représenté.

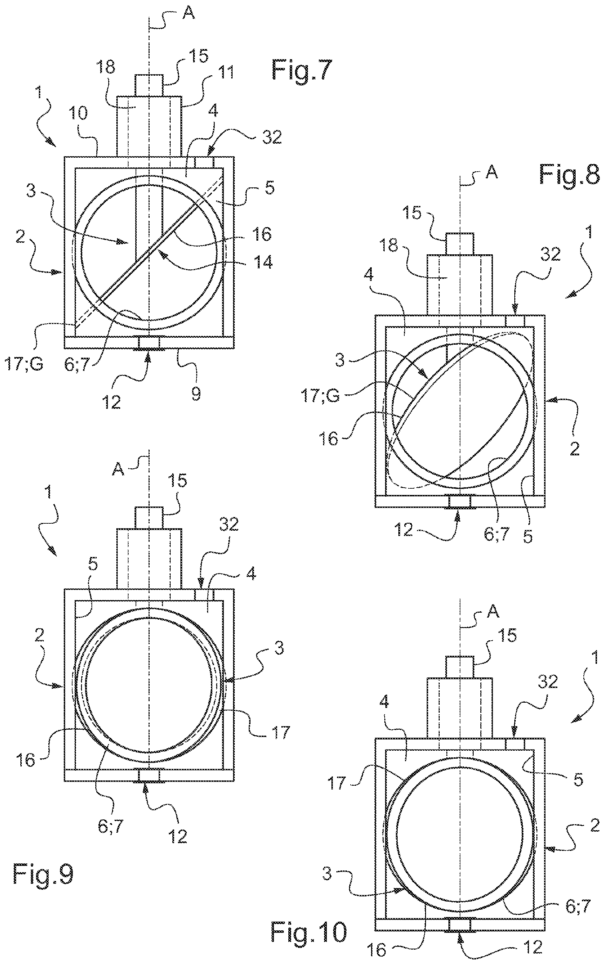

On a illustré aux figures 7 à 10 différentes positions angulaires du disque incliné 16.

Dans la position illustrée à la figure 10, ledit disque incliné 16 de l'élément obturateur 3 isole l'entrée 6 de la sortie 7, forçant la circulation du fluide à travers les troisième et quatrième entrées/sorties. Pour cela, on voit que le bord périphérique 17 du disque incliné 16 coopère avec étanchéité et complètement avec la paroi latérale 5 du logement cylindrique 4, à la manière d'une cloison séparant le logement en deux chambres internes distinctes et étanches, chacune tournée vers l'une des voies d'entrée 6 et de sortie 7 de passage du fluide. Cette position angulaire du disque incliné 16 et donc de l'élément obturateur 3 correspondent à l'une ou l'autre des seconde et troisième positions angulaires de la vanne 1.

Lorsque le dispositif d'entraînement est sollicité, il provoque la rotation dudit élément obturateur 3 selon l'angle souhaité. En regard de la figure 7, l'élément obturateur 3, via sa tige 15, a subi une rotation de +/-90° autour de l'axe A, si bien que le disque incliné 16 a tourné dans le logement 4 pour se trouver dans un plan sensiblement parallèle aux conduits coaxiaux 8 prolongeant l'entrée 6 et la sortie 7 du corps 2 de la vanne. Par suite de la rotation, le bord périphérique 17 n'est plus en contact total avec la paroi latérale 5 du logement, mais seulement partiel puisque des parties opposées du bord 17 se trouvent en regard des entrée et sortie circulaires 6 et 7. Cette position angulaire effacée du disque permet le passage du fluide entre l'entrée 6 et la sortie 7 via le logement interne étanche 4 du corps, et correspond à la première position angulaire de la vanne 1.

Une position intermédiaire dudit élément obturateur 3 est illustrée à titre d'exemple en regard de la figure 8, laquelle position correspond à une rotation de +/-45° du disque incliné 16 autour de l'axe A. Le bord 17 du disque est alors en partie en regard de l'entrée 6 et de la sortie 7, mettant en communication celles-ci pour le passage directe du fluide sous un débit moyen, le reste du débit passant par les troisième 21 et quatrième 22 entrée/sorties.

Quant à la figure 9, elle montre que le bord 17 du disque incliné 16 est en totalité en contact avec la paroi latérale 5 du logement lorsque ledit élément obturateur se trouve à environ 5° de la position de fermeture initiale de 0°. Cela signifie que le recouvrement total du disque 16 et du logement 4 permet d'accepter un défaut angulaire lors de l'assemblage sans diminuer le niveau d'étanchéité de la vanne. La première position angulaire de la vanne est finalement acquise sur une plage angulaire d'environ 10° (+ ou -5°).

On remarque aussi que, grâce à la conception du disque incliné dans un logement cylindrique avec contact cylindre-cylindre, les différentes positions angulaires de la vanne peuvent être atteinte, comme dit plus haut, soit par une rotation continue, soit par une rotation inverse de l'élément obturateur. Il peut ainsi être avantageusement utilisé indifféremment dans les deux sens du fait que seul son bord périphérique fait contact avec la paroi latérale du logement.

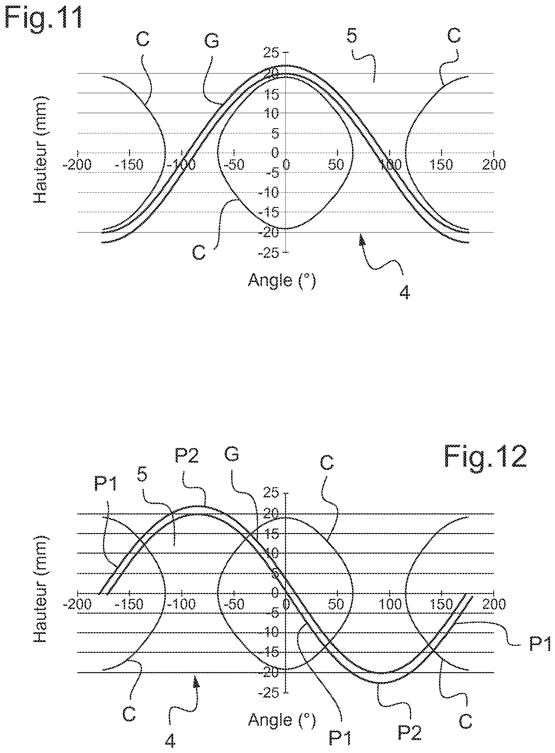

Les graphiques des figures 11 et 12 mettent bien en évidence la position du disque incliné 16 selon la hauteur (mm) de la paroi latérale 5 du logement, laquelle paroi de 360° est développée de -180° à +180° pour être représentée en plan.

Sur la figure 11, le disque incliné 16 dudit élément obturateur 3 occupe l'une des seconde ou troisième positions angulaires de la vanne 1. Par rapport à l'entrée 6 et à la sortie 7, illustrées par le contour C des conduits 8 les délimitant, on voit bien que le bord périphérique 17 formant la génératrice G du disque, représentée en plan selon une sinusoïde, est constamment en contact avec la paroi latérale 5 du logement. De la sorte, l'entrée 6 et la sortie 7 sont parfaitement isolées l'une de l'autre.

En regard de la figure 12, le disque incliné 16 occupe la première position angulaire de la vanne. Dans ce cas, on voit bien que le bord périphérique 17 sous forme de sinusoïde (décalée de Π/2 par rapport à la figure 11) passe alors en grande partie (référence P1) par les entrée et sortie 6 et 7, au milieu de celles-ci. Seule l'autre partie (référence P2) du bord 17 reste au contact de la paroi latérale 5 du logement, ce qui assure la mise en correspondances de l'entrée 6 et de la sortie 7.

Il est à noter que, comme le bord du disque se déplace linéairement sur la paroi cylindrique, cela permet d'éviter l'encrassement entre le disque et la paroi et d'assurer un auto-nettoyage de la vanne.

Si l'on se reporte à nouveau aux figures 1 à 3, on constate que l'invention concerne également un dispositif de conditionnement thermique de fluide comprenant une vanne telle que décrite plus haut.

Ledit dispositif comprend en outre un échangeur de chaleur 23, relié entre ladite troisième 21 et ladite quatrième 22 entrées/sorties, au niveau d'une voie 20, dite refroidie. La vanne conforme à l'invention permet ainsi une inversion du sens de circulation du fluide dans l'échangeur entre sa seconde et sa troisième position angulaire.

Ledit dispositif comprend encore ici une voie, dite non-refroidie, reliée à ladite deuxième entrée/sortie 7. Lorsque l'élément obturateur 3 est dans sa première position angulaire, le fluide passe directement de l'entrée 6 à la sortie 7, sans passer par la voie refroidie 20.

On assure de la sorte un même débit à travers la vanne 1 en effectuant un réglage de la température du fluide par un dosage de la quantité de fluide envoyée dans chacune des voies refroidie et non-refroidie.

Autrement dit, lorsque le disque incliné 16 dudit élément obturateur 3 se trouve dans la position de pleine ouverture illustrée en regard de la figure 1, avec son plan dans l'axe des conduits 8 de l'entrée 6 et de la sortie 7, le flux de circulation du fluide F traverse le logement interne 4 de la vanne 1 sans passer par la boucle de refroidissement 20. De la sorte, le fluide traversant la vanne n'est pas refroidi.

Comme le montre la figure 2, par suite de la rotation de 90° dans un sens autour de l'axe A du logement, le disque incliné 16 se trouve dans une position de fermeture, avec son bord 17 (génératrice G) en contact cylindre-cylindre sur toute sa périphérie avec la paroi latérale 5 du logement. De la sorte, le fluide ne communique plus directement entre l'entrée 6 et la sortie 7, mais sort de l'entrée 6 pour arriver dans le logement 4 et être dirigé, par la fermeture du disque d'obturation, en direction de la troisième entrée/sortie 21 de la vanne 1, et parcoure la boucle 20 dans le sens anti-horaire. Le fluide traverse alors le refroidisseur 23 où il y est refroidi, puis s'évacue par la quatrième entrée/sortie 22 de la vanne 1 pour entrer dans le logement 4 puis passer par la sortie 7 de la vanne.

En revanche, la circulation du fluide en regard de la figure 3 s'effectue dans le sens inverse de la précédente, en tournant de 90° ledit élément obturateur 3 dans l'autre sens par rapport à la position de fermeture de la figure 1. Le disque incliné 16 assure à nouveau, dans cette position, la fermeture de la vanne 1. De la sorte, le fluide traverse la boucle de refroidissement 20 dans le sens horaire, en suivant l'entrée 6, le logement 4, la quatrième entrée/sortie 22, la boucle 20, la troisième entrée/sortie 21, le logement 4 puis la sortie 7. Ainsi, on obtient une inversion de flux du fluide.

Différentes applications sont envisageables. Ledit échangeur pourra être configuré pour être un échangeur de gaz d'échappement recirculé et ladite vanne pourra être une vanne de gaz d'échappement recirculé. En variante, ledit échangeur pourra être configuré pour être un refroidisseur d'air de suralimentation et ladite vanne pourra être une vanne doseuse d'air.

## Revendications

1. Dispositif de conditionnement thermique de fluide comprenant :
- une vanne de circulation de fluide, notamment pour véhicule automobile, comprenant un corps (2) et un élément obturateur (3) pouvant occuper, par rotation dudit élément (3) par rapport audit corps (2), différentes positions angulaires, ledit corps (2) présentant une première (6), une seconde (7), une troisième (21) et une quatrième (22) entrées/sorties, ladite vanne étant configurée pour autoriser :
- dans l'une première desdites positions angulaires, la circulation du fluide de la première (6) à la seconde (7) entrée/sortie,
- dans l'une seconde desdites positions angulaires, la circulation du fluide de la première (6) à la troisième (21) entrée/sortie, et de la quatrième (22) à la seconde entrée/sortie (7),
- dans l'une troisième desdites positions angulaires, la circulation du fluide de la première (6) à la quatrième entrée/sortie (22), et de la troisième (21) à la seconde (7) entrée/sortie,
- un échangeur de chaleur (23), relié entre ladite troisième (21) et ladite quatrième (22) entrées/sorties, au niveau d'une voie (20), dite refroidie,
lesdites première (6) et seconde (7) entrées/sorties sont radiales et lesdites troisième (21) et quatrième (22) entrées/sorties sont axiales;
ledit corps (2) comprend un logement interne cylindrique (4) à section transversale circulaire, **caractérisé en ce que** ledit élément obturateur comporte au moins une partie d'obturation (14) agencée dans un plan incliné par rapport audit logement cylindrique (4) et coopérant avec la paroi latérale (5) dudit logement par une génératrice périphérique de manière à assurer un contact étanche entre l'élément obturateur (3) et le corps (2) en au moins une position angulaire, ledit élément obturateur (3) comportant une tige de commande qui est reliée à la partie inclinée pour l'entraîner en rotation et qui est disposée dans l'axe dudit logement cylindrique (14) passant par le centre de ladite partie inclinée.

2. Dispositif selon la revendication 1 dans laquelle ledit élément obturateur (3) présente une course angulaire supérieure à 360°.

3. Dispositif selon l'une quelconque des revendications 1 ou 2 dans laquelle lesdites troisième (21) et quatrième (22) entrées/sorties sont décalées axialement vers des extrémités axiales opposées dudit corps (2).

4. Dispositif selon l'une quelconque des revendications précédentes dans laquelle lesdites première (6) et seconde (7) entrées/sorties sont de section plus importantes que lesdites troisième (21) et quatrième (22) entrées/sorties.

5. Dispositif selon l'une quelconque des revendications précédentes dans laquelle lesdites première (6) et seconde (7) entrées/sorties sont dans le prolongement l'une de l'autre.

6. Dispositif selon l'une quelconque des revendications précédentes dans laquelle lesdites première (6) et seconde (7) entrées/sorties sont de même section.

7. Dispositif selon l'une quelconque des revendications précédentes, comprenant une voie, dite non-refroidie, reliée à ladite deuxième entrée/sortie (7).

8. Dispositif selon l'une quelconque des revendications précédentes dans lequel,
- ledit échangeur (23) est configuré pour être un échangeur de gaz d'échappement recirculé et ladite vanne (1) est configurée pour être une vanne de gaz d'échappement recirculé, ou
- ledit échangeur (23) est configuré pour être un refroidisseur d'air de suralimentation et ladite vanne (1) est configurée pour être une vanne doseuse d'air.

## Patentansprüche

1. Vorrichtung zur thermischen Aufbereitung einer Flüssigkeit, umfassend:
- ein Flüssigkeitsumlaufventil, insbesondere für ein Kraftfahrzeug, umfassend einen Körper (2) und ein Verschlusselement (3), das durch Drehung des Elements (3) in Bezug auf den Körper (2) verschiedene Winkelpositionen einnehmen kann, wobei der Körper (2) einen ersten (6), einen zweiten (7), einen dritten (21) und einen vierten (22) Eingang/Ausgang aufweist, wobei das Ventil konfiguriert ist, um Folgendes zu genehmigen:
- in einer ersten der Winkelpositionen das Zirkulieren der Flüssigkeit von dem ersten (6) zum zweiten (7) Eingang/Ausgang,
- in einer zweiten der Winkelpositionen das Zirkulieren der Flüssigkeit von dem ersten (6) zum dritten (21) Eingang/Ausgang und von dem vierten (22) zum zweiten (7) Eingang/Ausgang,
- in einer dritten der Winkelpositionen das Zirkulieren der Flüssigkeit von dem ersten (6) zum vierten Eingang/Ausgang (22) und von dem dritten (21) zum zweiten (7) Eingang/Ausgang,
- einen Wärmetauscher (23), der zwischen dem dritten (21) und dem vierten (22) Eingang/Ausgang auf Ebene eines sogenannten abgekühlten Wegs (20) verbunden ist,
der erste (6) und zweite (7) Eingang/Ausgang sind radial und der dritte (21) und vierte (22) Eingang/Ausgang sind axial;
der Körper (2) weist ein zylindrisches Innengehäuse (4) mit einem kreisförmigen Querschnitt auf, **dadurch gekennzeichnet, dass** das Verschlusselement mindestens einen Verschlussteil (14) aufweist, der in einer Ebene, die in Bezug auf das zylindrische Gehäuse (4) geneigt ist, angeordnet ist und mit der Seitenwand (5) des Gehäuses durch eine periphere Mantellinie derart zusammenwirkt, um einen abdichtenden Kontakt zwischen dem Verschlusselement (3) und dem Körper (2) in mindestens einer Winkelposition zu gewährleisten, wobei das Verschlusselement (3) eine Steuerstange aufweist, die mit dem geneigten Teil verbunden ist, um sie in Drehung zu versetzen, und die in der Achse des zylindrischen Gehäuses (14) angeordnet ist, die durch die Mitte des geneigten Teils verläuft.

2. Vorrichtung nach Anspruch 1, wobei das Verschlusselement (3) einen Winkelhub aufweist, der größer als 360° ist.

3. Vorrichtung nach einem der vorhergehenden Ansprüche 1 oder 2, wobei der dritte (21) und vierte (22) Eingang/Ausgang in Richtung der gegenüberliegenden axialen Enden des Körpers (2) axial versetzt sind.

4. Vorrichtung nach einem der vorhergehenden Ansprüche, wobei der erste (6) und zweite (7) Eingang/Ausgang von größerem Querschnitt als der dritte (21) und vierte (22) Eingang/Ausgang sind.

5. Vorrichtung nach einem der vorhergehenden Ansprüche, wobei der erste (6) und zweite (7) Eingang/Ausgang in der Verlängerung zueinander sind.

6. Vorrichtung nach einem der vorhergehenden Ansprüche, wobei der erste (6) und zweite (7) Eingang/Ausgang von gleichem Querschnitt sind.

7. Vorrichtung nach einem der vorhergehenden Ansprüche, umfassend einen sogenannten nicht abgekühlten Weg, der mit dem zweiten Eingang/Ausgang (7) verbunden ist.

8. Vorrichtung nach einem der vorhergehenden Ansprüche, wobei
- der Wärmetauscher (23) konfiguriert ist, um ein Wärmetauscher zur Abgasrückführung zu sein und das Ventil (1) konfiguriert ist, um ein Abgasrückführungsventil zu sein oder
- der Wärmetauscher (23) konfiguriert ist, um ein Ladeluftkühler zu sein und das Ventil (1) konfiguriert ist, um ein Luftdosierventil zu sein.

## Claims

1. Device for thermal conditioning of fluid comprising:
- a fluid circulation valve, notably for a motor vehicle, comprising a body (2) and a sealing element (3) able to occupy different angular positions by the rotation of said element (3) relative to said body (2), said body (2) having a first (6), a second (7), a third (21) and a fourth (22) inlet/outlet, said valve being configured so as to permit:
- in a first of said angular positions, the circulation of the fluid from the first (6) to the second (7) inlet/outlet,
- in a second of said angular positions, the circulation of the fluid from the first (6) to the third (21) inlet/outlet and from the fourth (22) to the second inlet/outlet (7),
- in a third of said angular positions, the circulation of the fluid from the first (6) to the fourth inlet/outlet (22) and from the third (21) to the second (7) inlet/outlet,
- a heat exchanger (23) connected between said third (21) and said fourth (22) inlets/outlets in the region of a so-called cooled line (20), said first (6) and second (7) inlets/outlets are radial and said third (21) and fourth (22) inlets/outlets are axial;
- said body (2) comprises an internal cylindrical housing (4) of circular cross section, **characterized in that** said sealing element comprises at least one sealing part (14) arranged in a plane which is inclined relative to said cylindrical housing (4) and cooperating with the lateral wall (5) of said housing by a peripheral generatrix, so as to ensure sealed contact between the sealing element (3) and the body (2) in at least one angular position, said sealing element comprising a control rod which is connected to the inclined part to drive said inclined part in rotation and which is arranged in the axis of said cylindrical housing (14) passing via the centre of said inclined part.

2. Device according to Claim 1, in which said sealing element (3) has an angular stoke which is greater than 360°.

3. Device according to either one of Claims 1 and 2, in which said third (21) and fourth (22) inlets/outlets are offset axially toward the opposing axial ends of said body (2).

4. Device according to any one of the preceding claims, in which said first (6) and second (7) inlets/outlets are of greater section than said third (21) and fourth (22) inlets/outlets.

5. Device according to any one of the preceding claims, in which said first (6) and second (7) inlets/outlets are in the extension of one another.

6. Device according to any one of the preceding claims in which said first (6) and second (7) inlets/outlets are of the same section.

7. Device according to any one of the preceding claims, comprising a so-called non-cooled line, connected to said second inlet/outlet (7).

8. Device according to any of the preceding claims, in which
- said exchanger (23) is configured so as to be a recirculated exhaust gas exchanger and said valve (1) is configured so as to be a recirculated exhaust gas valve, or
- said exchanger (23) is configured so as to be a charge air cooler and said valve (1) is configured so as to be an air metering valve.
